# EUROPEAN PATENT SPECIFICATION

(11) **EP 1 234 491 B1**
(45) Date of publication and mention of the grant of the patent: **27.10.2004**
(21) Application number: 02004408.7
(22) Date of filing: 26.02.2002
(51) Int. Cl.: A01D 34/90

(54) **Plant cutter apparatus**
Gerät zum Schneiden von Pflanzen
Appareil de coupe de plantes

(30) Priority: 27.02.2001 JP 2001052958; 01.03.2001 JP 2001056528
(43) Date of publication of application: 28.08.2002
(73) Proprietor: Honda Giken Kogyo Kabushiki Kaisha, Minato-ku, Tokyo (JP)
(72) Inventor: Warashina, Makoto, Wako-shi, Saitama-ken (JP); Uchitani, Hiroaki, Wako-shi, Saitama (JP); Sasaki, Hideshi, Wako-shi, Saitama (JP)
(74) Representative: Prechtel, Jörg, Dipl.-Phys. Dr.

(56) References cited:
- EP-A- 0 925 716
- US-A- 5 774 993
- US-A- 5 855 069
- PATENT ABSTRACTS OF JAPAN vol. 1997, no. 11, 28 November 1997 (1997-11-28) & JP 09 187137 A (NIKKARI CO LTD), 22 July 1997 (1997-07-22)

## Description

The present invention relates to an improvement in plant cutter apparatus of a type where a cutter blade mounted at the distal end of a handling rod is driven by a prime mover or drive source unit.

Generally, weeds growing on footpaths between rice fields etc. have to be cut several times a year because they tend to be nested by pests. The weed cutting is usually very laborious, and thus various automatic weed cutters have heretofore been proposed and put to practical use, among which shoulder-hung weed cutters are very popular because of their small size and handling ease. In most of the shoulder-hung weed cutters, a driving-force transmission shaft or drive shaft, which is passed through a pipe-shaped handling rod, is rotated via an engine provided at one end of the handling rod so as to rotate a cutter blade provided at the other end of the handling rod. In most cases, a human operator hangs the weed cutter on his or her shoulder using a hanging belt, and cuts weeds with the rotating cutter blade by gripping a U-shaped handle provided on an intermediate position of the handling rod to swing the handling rod in front-and-rear and left-and-right directions.

In recent years, there have been strong demands for further improvements in agricultural working environment. In the case of the shoulder-hung weed cutters too, there is an increasing demand for reduction in vibrations that are transmitted from the engine via the handling rod to the U-shaped handle, with a view to lowering the load on the human operator.

Particularly, in the weed cutters where the cutter blade is rotated by the engine via the drive shaft, the vibrations that are transmitted from the engine to the handling rod would present great vibrating amplitude in the rotating direction of the drive shaft. Thus, it is known that minimizing the vibrations in the rotating direction can effectively contribute to reduction of the undesired vibrations transmitted to the handle and hence to the human operator.

Weed cutters arranged to reduce the vibrations transmitted from the engine to the handling rod are known, for example, from Japanese Utility Model Laid-open Publications Nos. 51-64732 and 61-146121. In the weed cutter disclosed in the 51-64732 publication, the engine is mounted, via a clutch housing, at one end of the handling rod through which the drive shaft is passed, and the clutch housing has accommodated therein a clutch operating between the output shaft of the engine and the drive shaft. Further, in the disclosed weed cutter, a connection pipe is secured to the one end of the handling rod and extends toward the engine, and a vibration isolation member is interposed between opposed surfaces of the connection pipe and clutch housing. Thus, the engine is supported by the handling rod via the vibration isolation member in such a manner that vibrations transmitted from the engine to the handling rod can be decreased by means of the vibration isolation member. Namely, the vibration isolation member has two functions: the function of supporting the engine; and the function of attenuating the vibrations transmitted from the engine to the handling rod. In order to enhance or more effectively perform the engine supporting function, the vibration isolation member has to have greater rigidity, which means it is preferable that the vibration isolation member have smaller flexibility. On the other hand, in order to enhance or more effectively perform the vibration isolating function, it is preferable that the vibration isolating member have greater flexibility. Because the vibration isolating function thus tends to be directly influenced by, or correlated with, the engine supporting function, the weed cutter would encounter significant limitations in performing the vibration isolating function.

In the weed cutter disclosed in the 61-146121 publication, the engine is mounted, via a bellows-shaped or tapered vibration isolation member, at one end of the handling rod through which the drive shaft is passed, and the vibration isolation member has accommodated therein a clutch operating between the output shaft of the engine and the drive shaft. Here, the engine is supported by the handling rod via the vibration isolation member in such a manner that vibrations transmitted from the engine to the handling rod can be decreased by means of the vibration isolation member. Because the engine is supported by the handling rod via the vibration isolation member, this disclosed weed cutter can not perform a sufficient vibration isolating function as with the cutter disclosed in the first-mentioned 51-64732 publication.

In view of the foregoing, it is an object of the present invention to provide a plant cutter apparatus which can minimize vibrations transmitted from a drive source unit to a handling rod.

According to the present invention, there is provided an improved plant cutter apparatus of a type which comprises a pipe-shaped handling rod; a drive shaft passed through the pipe-shaped handling rod, a clutch case mounted on one end portion of the handling rod, a drive source unit mounted on the one end portion of the handling rod via the clutch case, and a cutter blade mounted on another end portion of the handling rod for being rotated by rotation, via the drive source unit, of the drive shaft. In the present invention, the clutch case is an integrally-formed, one-piece component part which includes a handling-rod mounting portion coupled to the one end portion of the handling rod, a flexible coupling portion formed to have given flexibility and extending from the handling-rod mounting portion toward the drive source unit, and a drive-source mounting portion extending from the flexible coupling portion and coupled with the drive source unit. The drive-source mounting portion has an axial loosely-fitting hole receiving the one end portion of the handling rod, inserted via the handling-rod mounting portion, in a loosely-fitting engagement such that the one end portion is slidable in an axial direction, and an abutting face or region formed on the way through the loosely-fitting hole for abutting engagement with the end surface of the one end portion.

In the present invention, the clutch case is characterized in that the function of supporting the drive source unit such as an engine and the function of attenuating vibrations transmitted from the drive source unit to the handling rod are performed independently of each other; namely, the clutch case can perform the drive-source supporting function and vibration isolation function separately without an operating correlation between the two functions. Specifically, the drive-source mounting portion can be supported in the axial direction with the end surface of the handling rod abutting against the abutting region of the drive-source mounting portion. The drive source unit is allowed to vibrate about the one end portion of the handling rod supporting the unit. Because the drive source unit is supported by the end surface of the handling rod as noted above, there is no need for the flexible coupling portion to support the drive source unit, so that the flexible coupling portion can fully perform its vibration attenuation function independently of, or without being influenced by, the drive-source supporting function. In the above-described manner, the present invention can significantly reduce the undesired vibrations that are transmitted from the drive source unit to the handling rod while at the same time allowing the rod to reliably support the unit. Further, because the clutch case is an integrally-formed one-piece component, it can decrease the number of parts of the cutter apparatus and thus simplify the construction of the cutter apparatus.

In a specific embodiment, the loosely-fitting hole tapers off toward the abutting region.

In a specific embodiment, the flexible coupling portion has a plurality of circumferential slits each formed in part of a circumference of the flexible coupling portion and communicating with an axial through-hole of the flexible coupling portion, and the plurality of circumferential slits are staggered along the axial direction of the flexible coupling portion. The provision of such circumferential slits allows the flexible coupling portion to have the given flexibility.

Certain preferred embodiments of the present invention will hereinafter be described in detail, by way of example only, with reference to the accompanying drawings, in which:
Fig. 1 is a side view showing a plant cutter apparatus in accordance with an embodiment of the present invention;
Fig. 2 is a view explanatory of a manner in which the plant cutter apparatus of Fig. 1 is used to cut weeds;
Fig. 3 is an enlarged sectional viewof the plant cutter apparatus of Fig. 1;
Fig. 4 is an enlarged sectional viewof the plant cutter apparatus, which particularly shows how a handling rod and clutch case of Fig. 3 are coupled with each other;
Fig. 5 is a perspective view of the clutch case shown in Fig. 4;
Fig. 6 is a sectional view taken along the 6 - 6 line of Fig. 5;
Fig. 7 is a sectional view of the handling rod taken along the 7 - 7 line of Fig. 4;
Fig. 8 is a sectional view taken along the 8 - 8 line of Fig. 4, which particularly shows how the handling rod and handling-rod mounting portion are coupled with each other; and
Fig. 9 is a sectional view corresponding to Fig. 4, which shows the handling rod and clutch case in a non-coupled state just for clarity of illustration.

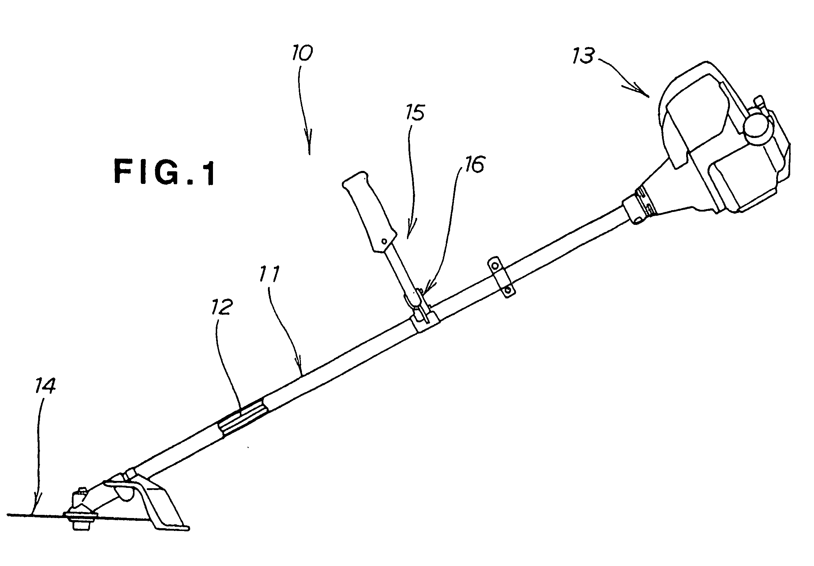

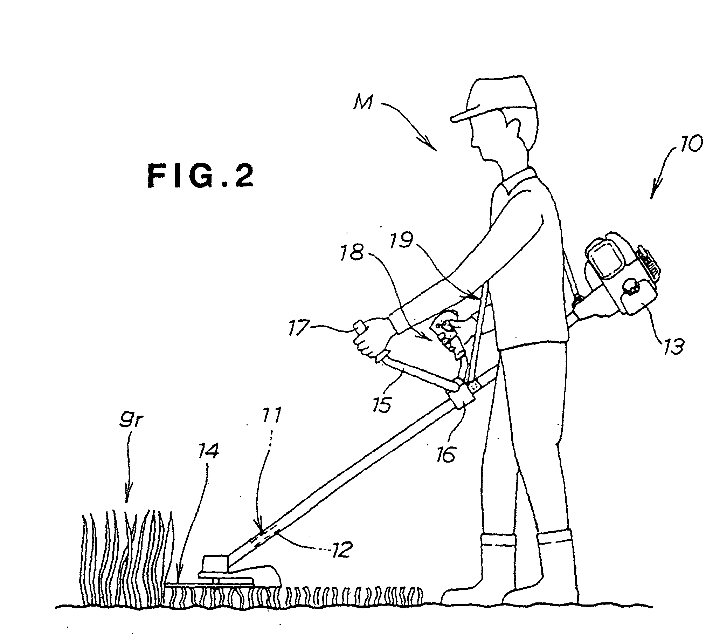

Figs. 1 and 2 show a plant cutter apparatus 10 in accordance with an embodiment of the present invention that is designed to cut unwanted plants such as bushes, weeds or grass. The plant cutter apparatus 10 includes a pipe-shaped handling rod 11, a driving-force transmission shaft or drive shaft 12 longitudinally passed through the handling rod 11, a prime mover or drive source unit 13, such as an engine or electric motor, mounted at one end of the handling rod 11, and a cutter blade 14 mounted at the other end of the handling rod 11. The drive shaft 12 can be rotated by activation of the drive source unit 13 so that the cutter blade 14 can be rotated by the drive source unit 13 via the drive shaft 12. The plant cutter apparatus 10 also includes a U-shaped handle 15 that is mounted on the handling rod 11 substantially at a longitudinally-middle portion thereof. Specifically, the handle 15 is fixed to the handling rod 11 by means of a handle holder 16, and has left and right grips 17 and 18. The right grip 18 of the handle 15 is an operator member provided with a throttle lever and lock lever for controlling the drive source unit 13.

As seen in Fig. 2, a human operator M can shoulder the plant cutter apparatus 10 on his or her shoulder using a hanging belt 19 secured at its opposite ends to intermediate portions of the handling rod 11. The human operator M can cut weeds gr by causing the cutter blade 14 to rotate via the drive source unit 13 while swinging the cutter blade 14 in front-and-rear and left-and-right directions using the grips 17 and 18.

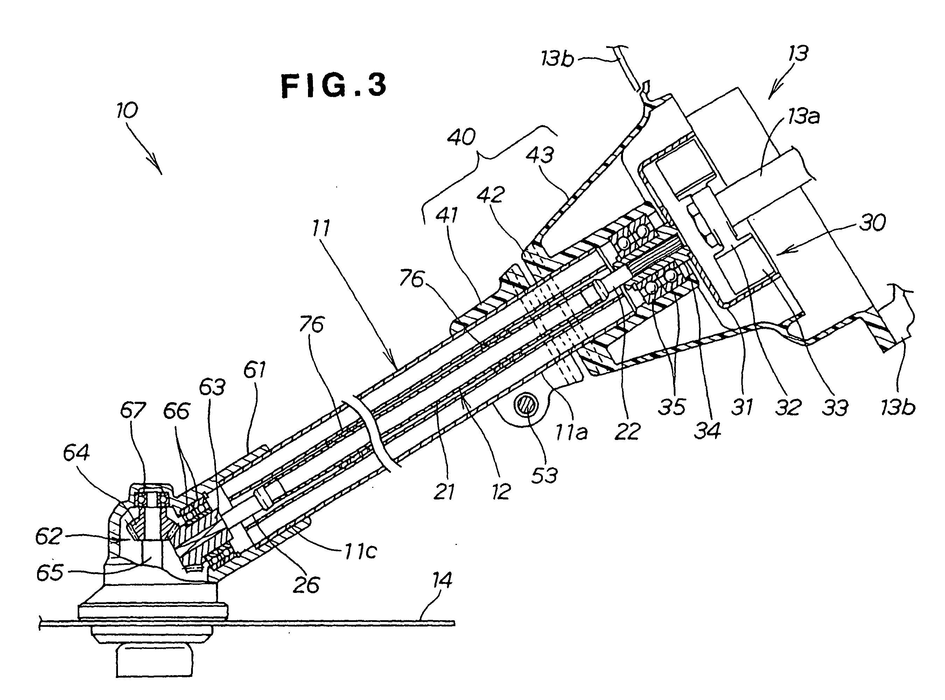

Fig. 3 is a sectional view of the plant cutter apparatus 10, which particularly shows a clutch mechanism 30 that is accommodated in a clutch case 40 and provided between the drive shaft 12 and an output shaft 13a of the drive source unit 13. Namely, the drive source unit 13 is mounted at the one end of the handling rod 11 via the clutch case 40. In the plant cutter apparatus 10, the handling rod 11 and drive shaft 12 are positioned co-axially with the output shaft 13a of the drive source unit 13.

The drive shaft 12 is a "different-metal-combined shaft", which is made of a combination of different kinds of metals. Specifically, the drive shaft 12 includes a pipe-shaped main shaft portion 21 made of a titanium alloy, a drive-side end shaft portion 22 secured to one end of the pipe-shaped main shaft portion 21, and a cutter-side end shaft portion 26 secured to the other end of the main shaft portion 21; both of the drive-side end shaft portion 22 and cutter-side end shaft portion 26 are made of steel.

The clutch mechanism 30 is a centrifugal clutch, which includes a clutch drum 31 that is spline-coupled with the drive-side end shaft portion 22 of the drive shaft 12, a rotation member 32 connected to the output shaft 13a of the drive source unit 13 and a clutch member 33 that brings the rotation member 32 into engagement with the clutch drum 31 only when the rotation member 32 is turning at high speed. The clutch drum 31 is a cup-shapedmember surrounding the rotation member 32.

The clutch case 40 is an integrally-molded component part made of a resin material, which includes a handling-rod mounting portion 41 coupled with one end portion 11a of the handling rod 11, a flexible coupling portion 42 having given flexibility and extending from the handling-rod mounting portion 41 toward the drive source unit 13 and a drive-source mounting portion 43 extending from the flexible coupling portion 42 toward the drive source unit 13 and coupled with the drive source unit 13. The clutch case 40 is preferably made of nylon resin having fiberglass mixed therein.

The above-mentioned handling-rod mounting portion 41 and drive-source mounting portion 43 have greater rigidity than the flexible coupling portion 42, so as to reliably support the handling rod 11 and drive source unit 13. The flexible coupling portion 42 has relatively small rigidity so that it has such flexibility as to effectively attenuate vibrations of the drive source unit 13. The drive-source mounting portion 43 is bolted to a case 13b of the drive source unit 13.

Because the clutch case 40 is a one-piece component part integrally molded to provide the handling-rod mounting portion 41, flexible coupling portion 42 and drive-source mounting portion 43, it can decrease the number of parts of the cutter apparatus and thus simplify the construction of the cutter apparatus.

The cutter blade 14 is rotatably connected to the other end 11c of the handling rod 11 via a transmission mechanism case 61. The transmission mechanism case 61 accommodates therein a transmission mechanism 62 disposed between the drive shaft 12 and the cutter blade 14. The transmission mechanism 62 includes a driving bevel gear 63 connected to the cutter-side end shaft portion 26, a driven bevel gear 64 meshing with the driving bevel gear 63, and a driven shaft 65 having mounted thereon the driven bevel gear 64 and cutter blade 14.

The drive shaft 12 is rotatably supported at a plurality of positions thereof spaced from each other in its longitudinal direction, as described below.

First, the one end portion of the drive shaft 12 is rotatably supported by the drive-source mounting portion 43 via a boss 34 and a plurality of bearings 35. Specifically, the drive-side end shaft portion 22 of the drive shaft 12 is spline-coupled to the boss 34 of the clutch drum 31, and the boss 34 is supported via the plurality of bearings 35.

Second, the other end portion of the drive shaft 12 is rotatably supported by the transmission mechanism case 61 via the driving bevel gear 63 and a plurality of bearings 66. Specifically, the cutter-side end shaft portion 26 of the drive shaft 12 is coupled with the driving bevel gear 63, and the driving bevel gear 63 is supported via the plurality of bearings 66.

Third, an intermediate portion of the drive shaft 12 between the drive-side end shaft portion 22 and the cutter-side end shaft portion 26 is rotatably supported by the handling rod 11 via a plurality of bushings 76 provided on the drive shaft 12 and spaced from each other at uniform intervals in the longitudinal direction thereof. Note that reference numeral 67 in Fig. 3 represents bearings for supporting the driven shaft 65.

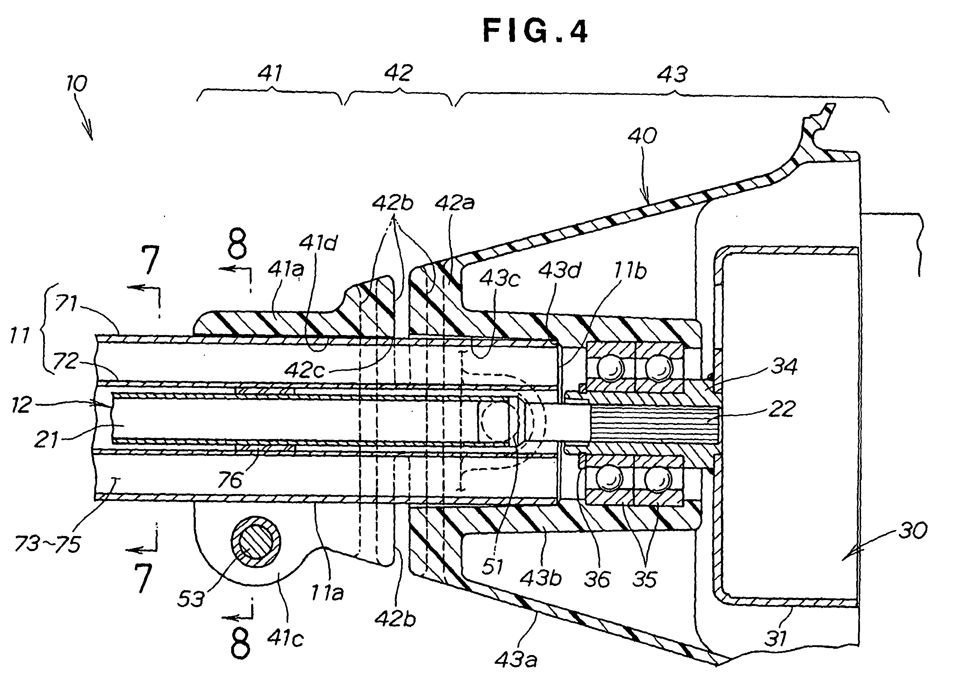

Figs. 4 to 8 shows how the handling rod 11 and clutch case 40 are coupled each other.

As clearly seen in Fig. 4, the handling-rod mounting portion 41 and flexible coupling portion 42 together constitute a cylinder in which the one end portion 11a of the pipe-shaped handling rod 11 is inserted. The drive-source mounting portion 43 has a tapered outer cylindrical portion 43a increasing in diameter in a direction toward the clutch mechanism 30, and an inner cylindrical portion 43b integrally formed with the tapered outer cylindrical portion 43a in concentric relation thereto. The inner cylindrical portion 43b has an axial loosely-fitting hole 43c, and it also has an abutting region 43d deep in the hole 43c. The drive-source mounting portion 43 also has bearings 35.

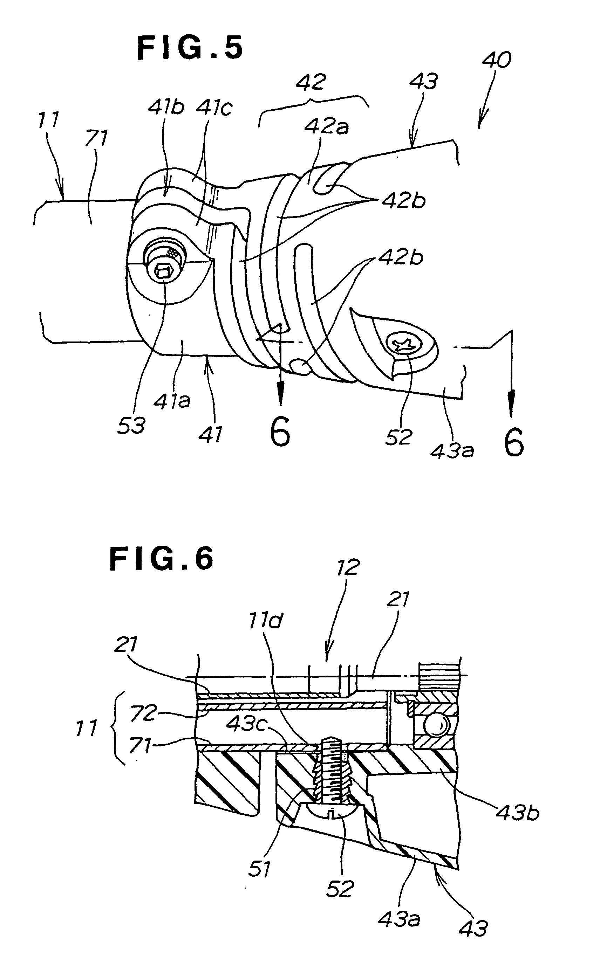

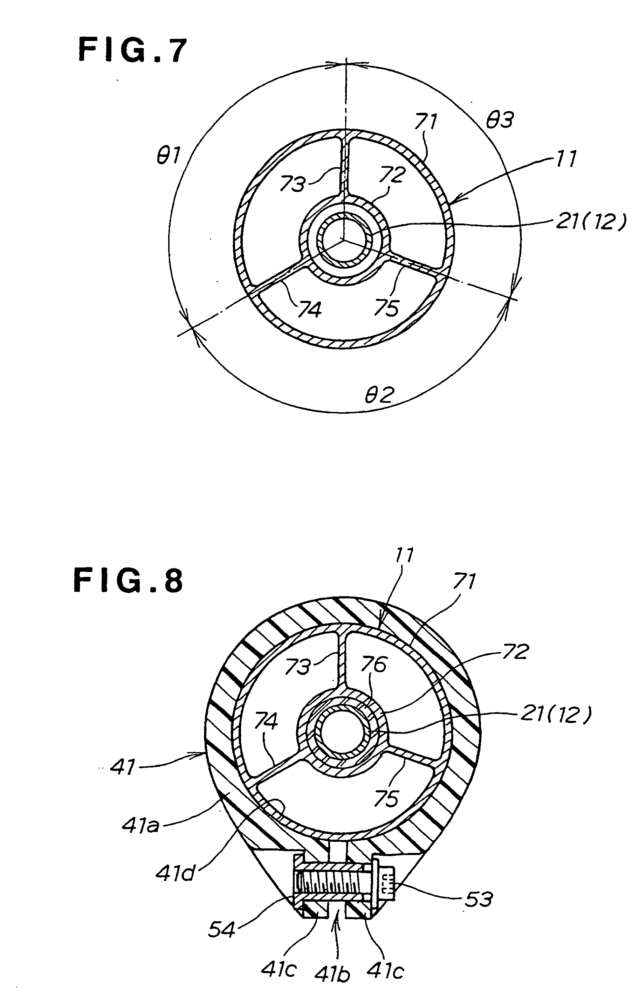

The loosely-fitting hole 43c is provided for receiving the one end portion 11a of the handling rod 11, inserted in the clutch case 40 via the handling-rod mounting portion 41, in a loose-fitting engagement such that the one end portion 11a is slidable in the axial direction. The hole 43c tapers off in a direction toward the abutting region 43d. The one end portion 11a of the handling rod 11 can abut at its end surface 11b against the abutting region 43d deep in the hole 43c of the inner cylindrical portion 43b. Reference numeral 36 in the figure represents a locking ring 36. The handling-rod mounting portion 41 has an axial slit 41b formed in its cylindrical body 41a (Fig. 5). Details of the mounting portion 41 will be discussed later in relation to Fig. 8.

As best seen in Fig. 5, the flexible coupling portion 42 of the clutch case 40 has a plurality of rows of circumferential slits 42b at predetermined axial intervals. Each of the circumferential slits 42b is a through hole communicating with an axial through-hole 42c of the flexible coupling portion 42 and elongated in the circumferential direction of a cylindrical wall 42a of the coupling portion 42; each of the circumferential slits 42b extends only part of the circumference of the cylindrical wall 42a. These slits 42b are staggered along the axial direction of the cylindrical wall 42a. Thus, in an imaginary sectional view of the flexible coupling portion 42 drawn by cutting the coupling portion 42 crosswise through an area where two circumferential slits 42b are present, the two circumferential slits 42b are symmetrical with each other about the axial centerline of the cylindrical wall 42a. The provision of these circumferential slits 42b allows the coupling portion 42 to have desired flexibility.

Fig. 6 is a sectional view taken along the 6 - 6 line of Fig. 5, which shows a peripheral area of the drive-source mounting portion 43 where an insert nut 51 is embedded to open into the interior of the mounting portion 43 and a screw 52 is driven through the insert nut 51. Specifically, the handling rod 11 includes an inner pipe portion 72, and an outer pipe portion 71 having an axial through-hole 11d. The screw 52 driven through the insert nut 51 into the axial through-hole 11d of the handling rod 11 functions to prevent the handling rod 11 from accidentally disconnecting from the drive-source mounting portion 43. The disconnection-preventing screw 52 may be replaced with a bolt, rivet or the like having a similar disconnection-preventing function.

Fig. 7 is a sectional view of the handling rod 11 taken along the 7 - 7 line of Fig. 4. In the handling rod 11, the inner pipe portion 72 extends through the interior of the outer pipe portion 71, and these inner and outer pipe portions 72 and 71 are interconnected via three radial ridges or stays 73, 74 and 75. The inner and outer pipe portions 72, 71 and radial stays 73, 74, 75 are formed integrally as a one-piece component part. Namely, the handling rod 11 is substantially in the form of a dual pipe structure that has a circular section and that has the inner and outer pipe portions 72 and 71 interconnected via the stays 73, 74 and 75 in concentric relation to each other. The three stays 73, 74 and 75 will hereinafter be called a first stay 73, second stay 74 and third stay 75, respectively. In the handling rod 11, an angle θ1 formed by the first and second stays 73 and 74 is set to be greater than 60° but smaller than 120° , an angle θ 2 formed by the second and third stays 74 and 75 is set to 120° , and an angle θ3 formed by the third and first stays 75 and 73 is set to the remaining angle (i.e. 360° - (θ1 + θ2); namely, the three stays 73, 74 and 75 are arranged about the axial center of the handling rod 11 at unequal angular intervals.

Fig. 8 is a sectional view taken along the 8 - 8 line of Fig. 4, which shows how the handling rod 11 is coupled with the handling-rod mounting portion 41. As shown, the drive shaft 12 is passed through the inner pipe portion 72 of the handling rod 11 and supported via a bushing 76.

The handling-rod mounting portion 41 is generally in the form of a cylinder 41a having a slit 41b and a pair of flanges 41c opposed to each other with the slit 41b interposed therebetween. The outer pipe portion 71 of the handling rod 11 is fitted in an axial through-hole 41d of the cylinder 41a, and the opposed flanges 41c are held together by means of a bolt 53 so that the one end portion of the outer pipe portion 71 is frictionally secured to the inner surface of the handling-rod mounting portion 41.

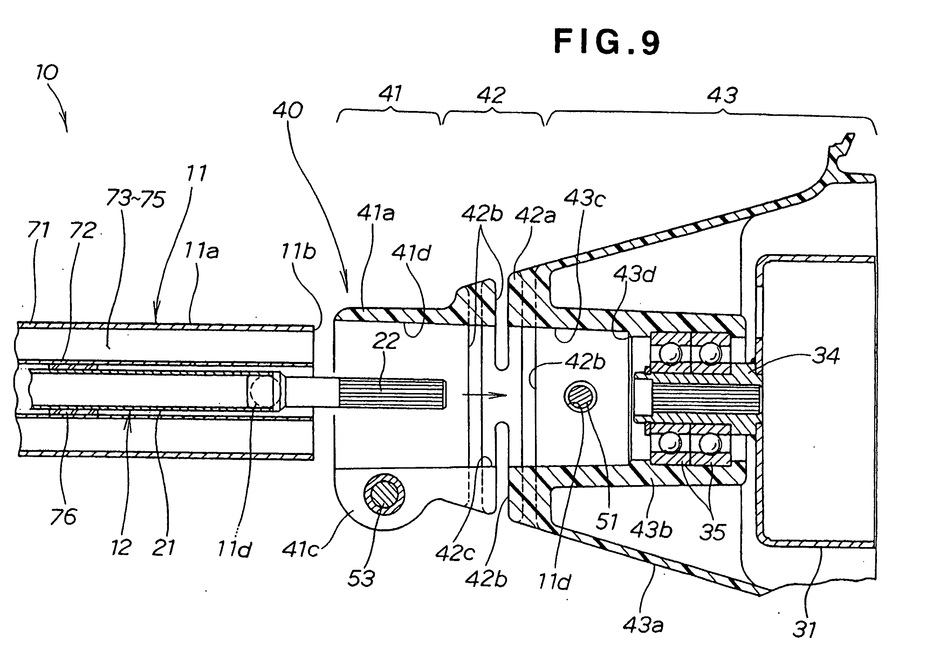

Fig. 9 is an exploded sectional view corresponding to Fig. 4, which shows the handling rod 11 and clutch case 40 in a non-coupled state just for clarity of illustration. As shown, the axial through-hole 41d of the handling-rod mounting portion 41, axial through-hole 42c of the flexible coupling portion 42 and axial loosely-fitting hole 43c of the drive-source mounting portion 43 together form an axially-continuous hole tapering off toward the abutting region 43d.

When the one end portion 11a of the handling rod 11 is inserted via the axial through-hole 41d, through the axial through-hole 42c, into the loosely-fitting hole 43c in a direction indicated by a right arrow in Fig. 9, the end surface 11b of the handling rod 11 abuts against the abutting region 43d that is a stepped end surface formed deep in the loosely-fitting hole 43c of the drive-source mounting portion 43. Note that the end surface 11b is a flat surface perpendicular to the axis of the rod 11. The loosely-fitting hole 43c is tapered to progressively decrease in diameter in the direction toward the drive source unit 13, and its deepest portion adjacent to the abutting end surface 43d has a diameter slightly greater than the outer diameter of the outer pipe portion 71 of the handling rod 11.

The clutch case 40 constructed in the above-described manner operates as follows.

In the instant embodiment, the clutch case 40 is characterized in that the function of supporting the drive source unit 13 and the function of attenuating vibrations transmitted from the drive source unit 13 to the handling rod 11 are performed independently of each other; namely, the clutch case 40 performs the drive-source supporting function and vibration isolation function separately without an operating correlation between the two functions.

More specifically, the drive-source mounting portion 43 can be supported in the axial direction with the end surface 11b of the handling rod 11 abutting against the abutting end surface 43d of the mounting portion 43. Thus, the drive source unit 13 can be supported by the end surface 11b of the handling rod 11 via the drive-source mounting portion 43. Note that the drive-source mounting portion 43 can be reliably prevented from accidentally disconnecting from the handling rod 11 because it is coupled to the rod 11 via the flexible coupling portion 42 and handling-rod mounting portion 41 constructed in the above-described manner.

Further, since the loosely-fitting hole 43c has such a diameter as to receive the one end portion 11a of the handling rod 11 for axial sliding movement, there is formed a slight gap between the outer peripheral surface of the handling rod 11 and the inner wall surface of the drive-source mounting portion 43 defining the loosely-fitting hole 43c. The slight gap allows the drive source unit 13 to vibrate within certain limits about the one end portion 11a of the rod 11 supporting the unit 13; that is, the slight gap performs the vibration isolation function. Because the drive source unit 13 is axially supported by the end surface 11b of the handling rod 11 as noted above, there is no need for the flexible coupling portion 42 to support the unit 13, so that the flexible coupling portion 42 can fully perform its vibration attenuation function independently of the drive-source supporting function.

In the above-described manner, the instant embodiment can significantly reduce the undesired vibrations that are transmitted from the drive source unit 13 to the handling rod 11 while at the same time allowing the rod 11 to reliably support the unit 13.

In the above-described embodiment, the one end portion 11a of the handling rod 11 may be coupled with the handling-rod mounting portion 41 using any other desired construction than that shown in Fig. 8. Further, the flexible coupling portion 42 may be constructed in any other suitable manner rather than being limited to the construction of Fig. 5 having the plurality of circumferential slits 42b, as long as the coupling portion 42 can have such flexibility as to effectively attenuate of the vibrations of the drive source unit 13. For example, the flexible coupling portion 42 may be shaped like bellows. Further, the disconnection-preventing screw or other type of locking member 52 may be dispensed with as desired.

Plant cutter apparatus includes a handling rod (11), a drive source unit (13) mounted on one end portion (11a) of the handling rod (11) via a clutch case (40), and a cutter blade (14) mounted on the other end portion of the handling rod for being rotated by activation of the drive source unit. With the handling rod inserted in an axial loosely-fitting hole (43c) of the clutch case, the one end portion of the handling rod abuts at its end surface against an abutting region (43d) formed on the way through the loosely-fitting hole. The drive source unit is supported by the end surface of the handling rod via a drive-source mounting portion (43) of the clutch case. The drive source unit is allowed to freely vibrate about the one end portion of the handling rod supporting the unit, so that a flexible coupling portion (42) of the clutch case can perform a vibration attenuation function to reduce vibrations transmitted from the drive source unit to the handling rod.

## Claims

1. A plant cutter apparatus comprising:
a pipe-shaped handling rod (11);
a drive shaft (12) passed through said pipe-shaped handling rod (11);
a clutch case (40) mounted on one end portion (11a) of said handling rod (11);
a drive source unit (13) mounted on the one end portion (11a) of said handling rod (11) via said clutch case (40); and
a cutter blade (14) mounted on another end portion of said handling rod (11) for being rotated by rotation, via said drive source unit (13), of said drive shaft (12),
said clutch case (40) being an integrally-formed component part that includes:
a handling-rod mounting portion (41) coupled to the one end portion (11a) of said handling rod (11);
a flexible coupling portion (42) formed to have given flexibility and extending from said handling-rod mounting portion (41) toward said drive source unit (13); and
a drive-source mounting portion (43) extending from said flexible coupling portion (42) and coupled with said drive source unit (13),
said drive-source mounting portion (43) having:
an axial loosely-fitting hole (43c) receiving the one end portion (11a) of said handling rod (11), inserted via said handling-rod mounting portion (41), in a loosely-fitting engagement such that the one end portion (11a) is slidable in an axial direction; and
an abutting region (43d) formed on the way through said loosely-fitting hole (43c) for abutting engagement with an end surface (11b) of the one end portion (11a).

2. The plant cutter apparatus of claim 1, wherein said loosely-fitting hole (43c) tapers off toward said abutting region (43d).

3. The plant cutter apparatus of claim 2, wherein said flexible coupling portion (42) has a plurality of circumferential slits (42b) each formed in part of a circumference of said flexible coupling portion (42) and communicating with an axial through-hole (42c) of said flexible coupling portion (42), and the plurality of circumferential slits (42b) are staggered along an axial direction of said flexible coupling portion (42).

## Patentansprüche

1. Pflanzen-Schneide-Vorrichtung, aufweisend:
eine rohrförmige Handhabungs-Stange (11),
eine Antriebswelle (12), welche durch die rohrförmige Handhabungs-Stange (11) verläuft,
ein an einem Endabschnitt (11a) der Handhabungs-Stange (11) befestigtes Kupplungs-Gehäuse (40),
eine an dem einen End-Abschnitt (11a) der Handhabungs-Stange (11) mittels des Kupplungs-Gehäuses (40) befestigte Antriebsquelle-Einheit (13), und
ein an einem anderen End-Abschnitt der Handhabungs-Stange (11) befestigtes Schneide-Blatt (14), um über die Antriebsquelle-Einheit (13) durch Rotation der Antriebswelle (12) rotiert zu werden,
wobei das Kupplungs-Gehäuse (40) ein einstückig ausgebildetes Komponenten-Teil ist, welches enthält:
einen an dem einen Endabschnitt (11a) der Handhabungs-Stange (11) befestigten Handhabungs-Stange-Befestigungs-Abschnitt (41),
einen Flexible-Kopplung-Abschnitt (42), welcher derart ausgebildet ist, dass er eine gegebene Flexibilität aufweist, und welcher sich von dem Handhabungs-Stange-Befestigungs-Abschnitt (41) aus auf die Antriebsquelle-Einheit (13) zu erstreckt, und
einen Antriebsquelle-Befestigungs-Abschnitt (43), welcher sich von dem Flexible-Kopplung-Abschnitt (42) aus erstreckt, und welcher mit der Antriebsquelle-Einheit (13) gekoppelt ist,
wobei der Antriebsquelle-Befestigungs-Abschnitt (43) aufweist:
ein axiales Lose-Passung-Loch (43c), welches in einem Lose-Passung Eingriff den einen über den Handhabungs-Stange-Befestigungs-Abschnitt (41) eingeführten Endabschnitt (11a) der Handhabungs-Stange (11) aufnimmt, so dass der eine Endabschnitt (11a) in einer Axial-Richtung gleitbar ist, und
einen auf dem Weg durch das Lose-Passung-Loch (43c) ausgebildeten Anstoß-Bereich (43d) zum Anstoß-Eingriff mit einer End-Fläche (11b) des einen End-Abschnitts (11a).

2. Pflanzen-Schneide-Vorrichtung gemäß Anspruch 1, wobei sich das Lose-Passung-Loch (43c) auf den Anstoß-Bereich (43d) zu verjüngt.

3. Pflanzen-Schneide-Vorrichtung gemäß Anspruch 2, wobei der Flexible-Kopplung-Abschnitt (42) eine Mehrzahl von Umfangs-Schlitzen (42b) aufweist, welche jeweils in einem Teil des Umfangs des Flexible-Kopplung-Abschnitts (42) ausgebildet sind, und welche mit einem Axial-Durchgangs-Loch (42c) des Flexible-Kopplung-Abschnitts (42) verbunden sind, und wobei die Mehrzahl der Umfangs-Schlitze (42b) entlang einer Axial-Richtung des flexiblen Kopplungsabschnitts (42) versetzt sind.

## Revendications

1. Appareil de coupe de plantes comprenant :
une tige de manipulation sous forme de tuyau (11) ;
un arbre moteur (12) passant à travers ladite tige de manipulation sous forme de tuyau (11) ;
un carter d'embrayage (40) monté sur une première partie d'extrémité (11a) de ladite tige de manipulation (11) ;
une unité de source d'entraînement (13) montée sur la première partie d'extrémité (11a) de ladite tige de manipulation (11) par l'intermédiaire dudit carter d'embrayage (40) ; et
un couteau (14) monté sur une deuxième partie d'extrémité de ladite tige de manipulation (11) pour être entraînée en rotation, par l'intermédiaire de ladite unité de source d'entraînement (13), dudit arbre moteur (12),
ledit carter d'embrayage (40) étant un composant formé d'une seule pièce qui comprend :
une partie de montage de tige de manipulation (41) couplée à la première partie d'extrémité (11a) de ladite tige de manipulation (11) ;
une partie de couplage flexible (42) formée pour avoir une flexibilité donnée et s'étendant à partir de ladite partie de montage de tige de manipulation (41) vers ladite unité de source d'entraînement (13) ; et
une partie de montage de source d'entraînement (43) s'étendant à partir de ladite partie de couplage flexible (42) et couplée à ladite unité de source d'entraînement (13),
ladite partie de montage de source d'entraînement (43) ayant :
un orifice axial à ajustement lâche (43c) recevant la première partie d'extrémité (11a) de ladite tige de manipulation (11) insérée par l'intermédiaire de ladite partie de montage de tige de manipulation (41) dans une mise en prise lâche, de sorte que la première partie d'extrémité (11a) puisse coulisser dans un sens axial ; et
une zone de butée (43d) formée sur le passage à travers ledit orifice à ajustement lâche (43c) pour une mise en prise en butée avec une surface d'extrémité (11b) de la première partie d'extrémité (11a).

2. Appareil de coupe de plantes selon la revendication 1, dans lequel ledit orifice à ajustement lâche (43c) se rétrécit vers ladite zone de butée (43d).

3. Appareil de coupe de plantes selon la revendication 2, dans lequel ladite partie de couplage flexible (42) a une pluralité de fentes circonférentielles (42b), chacune formée dans une partie de circonférence de ladite partie de couplage flexible (42) et communiquant avec un trou passant axial (42c) de ladite partie de couplage flexible (42), et la pluralité de fentes circonférentielles (42b) est étagée le long d'un sens axial de ladite partie de couplage flexible (42).
